# EUROPEAN PATENT APPLICATION

(11) **EP 4 644 623 A1**
(43) Date of publication of application: **05.11.2025**
(21) Application number: 25165376.2
(22) Date of filing: 21.03.2025
(51) Int. Cl.: E03C 1/04

(54) **ORIENTABLE HANDHELD SHOWER**

(30) Priority: 16.04.2024 IT 202400008578
(71) Applicant: Bossini S.p.A., 25014 Castenedolo, Brescia (IT)
(72) Inventor: ZILIANI, Marcello, I-25014 Castenedolo, BRESCIA (IT); BOSSINI, Nadia, I-25014 Castenedolo, BRESCIA (IT)
(74) Representative: Pulieri, Gianluca Antonio

(57) **Abstract**

An orientable hand shower (100) comprises a head (1) and a handle pipe (2), both having an axisymmetric extension about the respective head axes T and pipe axis C. The head (1) is suitable for rotating about the pipe (2) with respect to a rotation axis (X), perpendicular to the head base (11) and to the pipe base (21) and inclined with respect to the head axis (T) by a head inclination angle (Δ) and with respect to the pipe axis (C) by a pipe inclination angle (µ).

The orientable hand shower (100) further comprises an abutment element (3) interposed between the head (1) and the pipe (2) and comprising an upper base (31), facing the head (1), and a lower base (32), facing the pipe (2), parallel and offset therebetween.

## Description

### Field of application

The present invention relates to a hand shower.

In the hand shower sector, the use of hand showers with heads using a fixed orientation with respect to the direction of the handle pipe is widespread. In fact, the head and the handle pipe are often made in one piece, or else they are covered with a single covering that renders them a single unit.

As a result the flow of water exiting the head is rigidly directed along the single direction of extension of the hand shower and may be oriented only by means of moving the hand shower on the part of the user.

Such hand showers are generally utilized by the user either by holding them or inserting them into a fixed shower support, such as a wall structure or a column.

Therefore, disadvantageously, in order to be able to vary the direction of the jet of water from such showers, active intervention on the part of the user is always required.

Furthermore, according to a further disadvantage, when the hand shower is inserted into a support, the water flow may not be directed but remains constrained to the structure of the shower.

In addition, disadvantageously, the use of additional accessories in order to expand the orientation of the jet increases the overall dimensions and causes discomfort when using the shower.

Finally, these hand showers are not very manageable and are not suitable for use by users with reduced mobility, representing a further disadvantage in terms of accessibility and comfort.

To overcome these drawbacks, solutions have been sought in the hand shower sector that may allow a user to change the direction of flow of the hand shower. An example is described in the document US 2011/121105 A1. However, this hand shower includes a large number of components and control valves, making it difficult to manufacture and making it have a complex and non-linear aesthetic.

### Solution of the invention

There appears therefore to be a significant need to provide a shower device that is capable of overcoming those drawbacks that are typical of the state of the art.

In particular, the object of the present invention is to provide a shower device that allows the flow of water to be oriented.

Such need is satisfied by a hand shower according to claim 1. The claims dependent thereupon describe preferred or advantageous embodiments of the invention, comprising further advantageous features.

### Description of the drawings

The features and advantages of the hand shower will become apparent from the description below of some preferred embodiments, given by way of indicative and nonlimiting example, with reference to the attached figures, wherein:

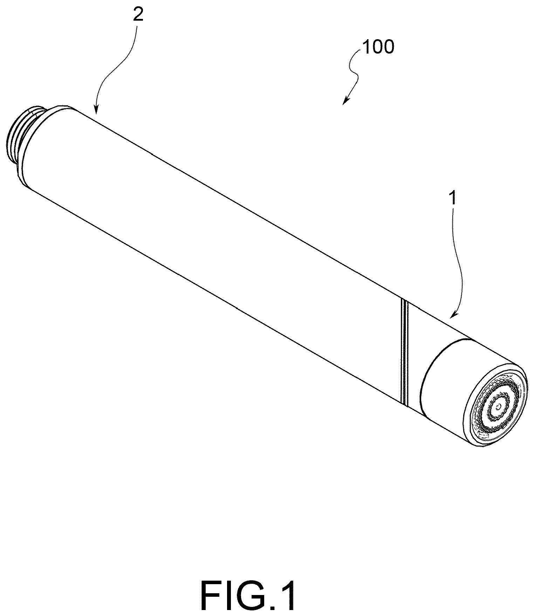

- Figure 1 shows an orientable hand shower according to the present invention;
- Figures 2a and 2b show the example of Figure 1 in a front view and in a sectional view, respectively, in the rectilinear configuration;
- Figures 3a and 3b show the example of Figure 1 in a front view and in a sectional view in the corner configuration, respectively;

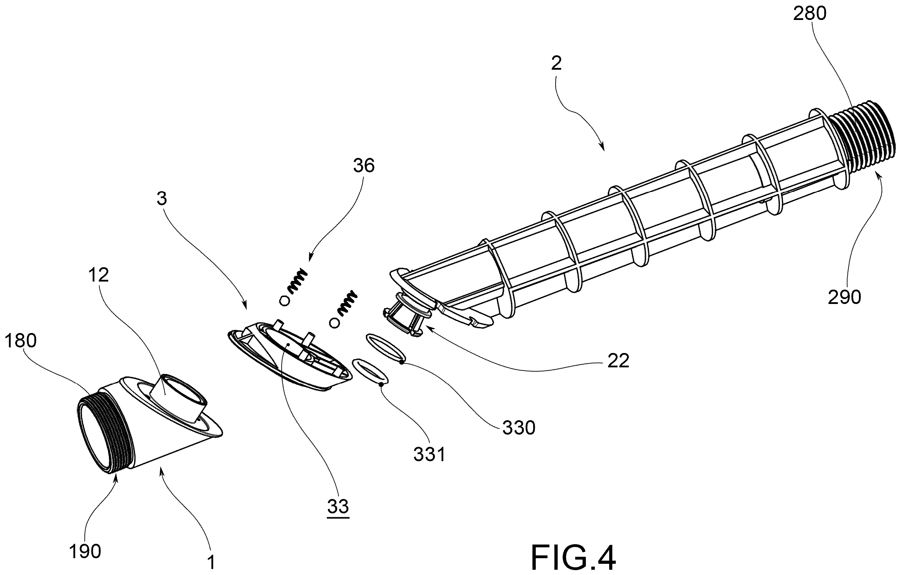

- Figure 4 shows an exploded view of the orientable hand shower, for example comprising the orientable head, the abutment element and the handle pipe;
- Figures 5a and 5b are two perspective views of the orientable head;
- Figure 6 shows the orientable head in a sectional view;
- Figure 7 shows the handle pipe in a perspective view;
- Figure 8 shows the handle pipe in a sectional view;
- Figure 9 shows a detail of the pipe, in particular the engagement portion;

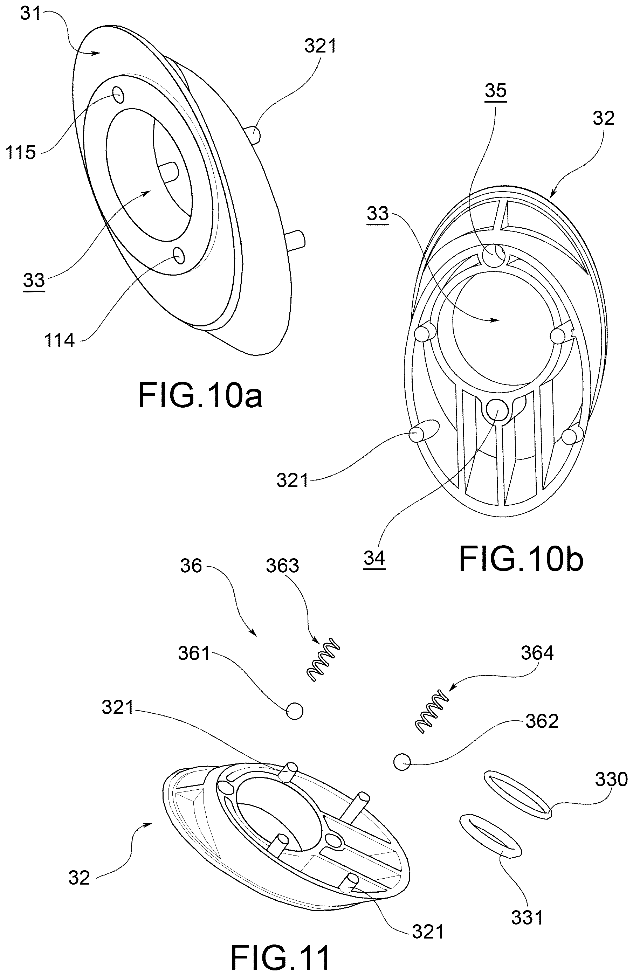

- Figures 10a and 10b are two perspective views of the abutment element;
- Figure 11 shows an exploded view of the abutment element;
- Figure 12 shows an orientable hand shower, connected to a shower column;
- Figure 13 shows an orientable hand shower, connected to a shower column using an extractable hose and with a hand shower return system.
- Figure 14 shows a further embodiment of the connection between the head and the hand shower pipe.

### Detailed description

With reference to the accompanying figures, an orientable hand shower according to the present invention has been indicated using the reference numeral 100.

The orientable hand shower 100 comprises an orientable head 1 and a handle pipe 2.

The orientable head 1 extends axially symmetrically about a head axis T.

The orientable head 1 comprises a contact portion 10 and a head surface 100. In particular, the head surface 100 comprises the lateral surface of the head 1. For example, the orientable head 1 extends in a circular manner about the head axis T.

The contact portion 10 of the head 1 is adapted such as to allow for engagement between the head 1 and the pipe 2.

The contact portion 10 of the orientable head 1 comprises a head base 11, inclined by a head angle α with respect to the head axis T. Such head angle α is less than 90°.

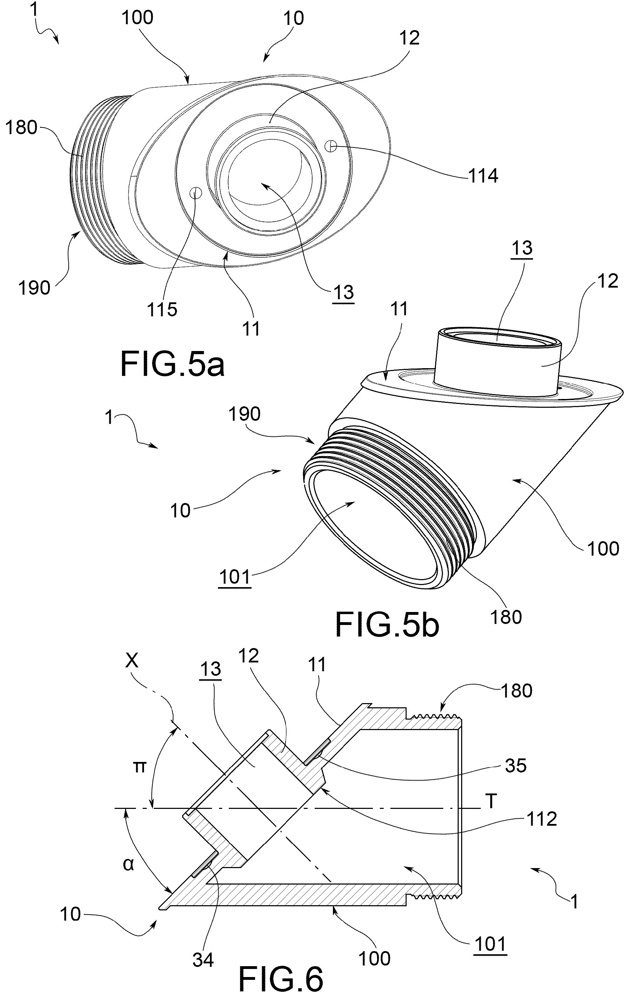

In a further embodiment, shown for example in Figure 6, the head angle α is equal to 45°.

According to the embodiment, wherein the orientable head 1 extends in a circular manner about said head axis T, the head base 11 is elliptical in shape.

The head surface 100 defines a head compartment 101 suitable for allowing the passage of the water flow.

The contact portion 10 of the orientable head 1 comprises head engagement means 12. Such head engagement means 12 extend from the head base 11 and define a head hole 13 connected to the head compartment 101.

In other words, the head engagement means 12 and the head compartment 101 define a continuous pipe for the passage of the water flow.

The handle pipe 2 has an axisymmetric extension about a pipe axis C.

The handle pipe 2 comprises an engagement portion 20 and a pipe surface 200.

In particular, the pipe surface 200 comprises the lateral surface of the pipe 2. For example, the pipe 2 extends in a circular manner about the pipe axis C.

The engagement portion 20 of the pipe 2 is adapted such as to allow for engagement between the pipe 2 and the head 1.

The engagement portion 20 of the pipe 2 comprises a pipe base 21, inclined by a pipe angle β with respect to the pipe axis C. Such pipe angle β is less than 90°.

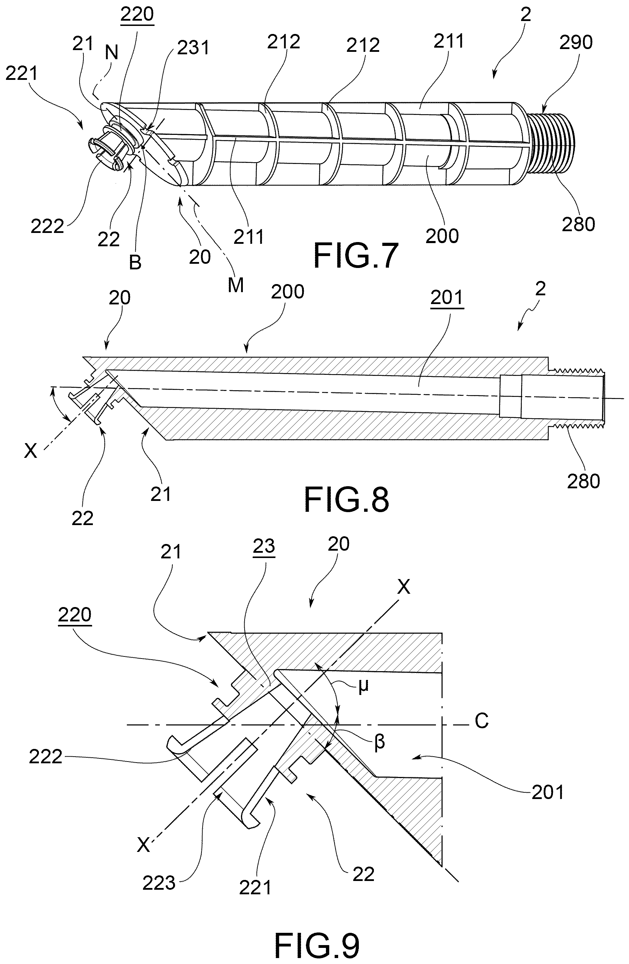

In a further embodiment, shown for example in Figures 8 and 9, the pipe angle β is equal to 45°.

According to the embodiment, wherein the pipe 2 extends in a circular manner about said pipe axis C, the pipe base 21 is elliptical in shape.

According to a further embodiment, the head base 11 and the pipe base 21 are arranged upon planes that are parallel therebetween.

The pipe surface 200 defines a pipe compartment 201, suitable for allowing for the passage of the water flow.

The engagement portion 20 of the pipe 2 comprises pipe engagement means 22. Such pipe engagement means 22 extend from the pipe base 21 and define a pipe hole 23 connected to the pipe compartment 201.

In other words, the pipe engagement means 22 and the pipe compartment 201 define a continuous pipe for the passage of the water flow.

In one embodiment variant wherein the meeting point of the major diagonals M and minor diagonals N of the pipe base 21 is defined as point B, i.e. the center of the pipe base 21, the pipe engagement means 22 are displaced along the major diagonal M with respect to said point B. In other words, the pipe engagement means 22 are displaced relative to the center of the pipe base 21.

The connection between the orientable head 1 and the pipe 2 is implemented by means of an engagement between the head engagement means 12 and the pipe engagement means 22.

Such head engagement means 12 are suitable for being engaged with the pipe engagement means 22 by means of a seal coupling.

In one variant embodiment, the pipe engagement means 22 comprise male engagement means 221 suitable for engaging the head engagement means 12. In one embodiment, the connection between the orientable head 1 and the pipe 2 is implemented by means of a permanent snap-fit elastic connection.

Advantageously, this type of coupling ensures impermeability and prevents flow losses.

According to a further embodiment, depicted, for example, in Figure 9, the pipe engagement means 22 comprise a plurality of engagement petals 222 suitable for engaging an abutment area 112 comprised within the head engagement means 12.

In one exemplary embodiment, the plurality of engagement petals 222 comprises four engagement petals.
- With the end part thereof the pipe engagement means 22 comprise a locking portion 223 suitable for abutting against the head engagement means 12 and maintaining a connection thereto.

In one variant embodiment, the sealing element 331 is suitable for occupying the locking portion 223 and abutting against the head engagement means 12.

The pipe engagement means 22 comprise a groove 220, suitable for housing a sealing element 331.

For example, said sealing element 331 is an elastic element, such as a gasket, for example an O-ring, lip, membrane.

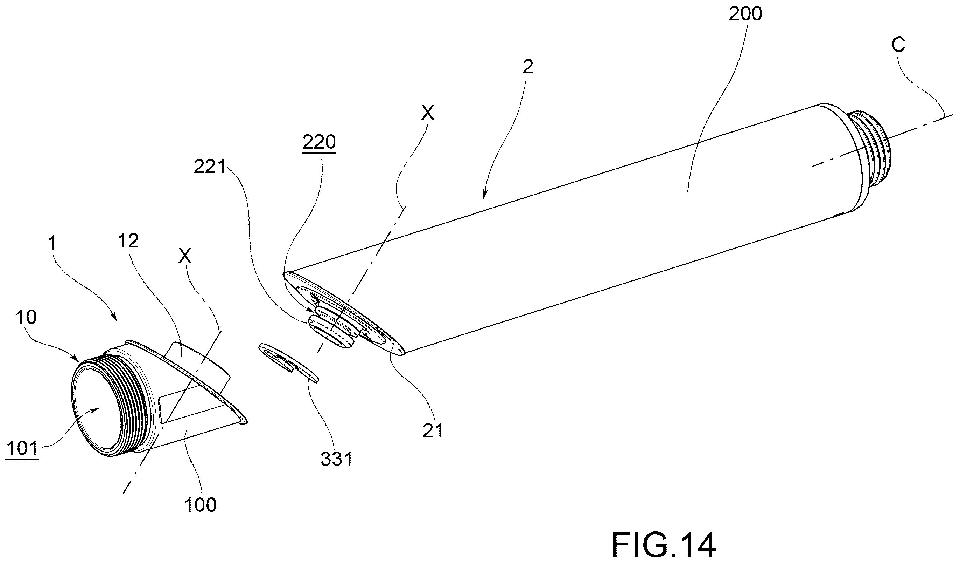

In one embodiment, depicted for example in Figure 14, the sealing element 331 is a Benzing ring. Advantageously, the use of a Benzing ring allows for a simple and effective implementation of the coupling between the head and the pipe, ensuring a seal in use. Furthermore, the use of such a sealing element reduces, during the design phase, the coupling analysis and design time. According to a further advantage, such a coupling allows it to be easily disassembled during maintenance of the hand shower.

In a preferred embodiment, the sealing element 331 is an O-ring seal.

Such coupling element 331 allows for mutual engagement between the head engagement means 12 and the pipe base 21, by means of the elastic reaction generated by the crushing thereof.

In one embodiment, a coupling element 330 is fitted onto the pipe engagement means 22 and is suitable for abutting against the pipe base 21.

For example, such coupling element 330 is an elastic element, such as for example a gasket, for example an O-ring, lip or membrane.

In one embodiment, the sealing element 330 is an O-ring seal.

In one embodiment, the orientable head 1 and the pipe 2 are made of the same material.

In a further embodiment, the orientable head 1 and the pipe 2 are made of the same plastic material, preferably polypropylene (PP).

The orientable head 1 is suitable for rotating with respect to the pipe 2 about a rotation axis X. Said axis X is perpendicular to an imaginary plane of the head base 11 and the pipe base 21. Said axis of rotation X passes through the center of the head hole 13 and of the pipe hole 23.

Said axis X is inclined by a head inclination angle π with respect to the head axis T and by a pipe inclination pipe µ with respect to the pipe axis C.

In one embodiment, the head inclination angle Δ and the pipe inclination angle µ have the same amplitude.

In a further embodiment the amplitude of the head inclination angle π and the pipe inclination angle µ is equal to 45°.

The head 1 is suitable for performing a complete rotation about the rotation axis X with respect to the pipe 2.

When the head axis T of the head 1 and the pipe axis C of the pipe 2 are aligned and coincident, the orientable hand shower 100 is in a rectilinear configuration A.

In said rectilinear configuration A, the head base 11 and the pipe base 21 are arranged upon planes that are parallel therebetween.

By rotating the head 1 about the axis X relative to the pipe 2, the orientable hand shower 100 reaches an angle configuration B.

In said angle configuration B, the head base 11 and the pipe base 21 are arranged upon planes parallel therebetween and the head axis T of the head 1 and the pipe axis C of the pipe 2 are perpendicular.

In one embodiment, the amplitude of the head inclination angle π and the pipe inclination angle µ is equal to 45° and allows, starting from the rectilinear configuration A, for a rotation of 180° of the head 1 about the axis of rotation X with respect to the pipe 2 thereby allowing the orientable hand shower to reach the angle configuration B.

It is clear that there are infinite configurations that may be obtained from the complete rotation of the head 1 about the rotation axis X with respect to the pipe 2. Advantageously, during rotation and in all of the infinite configurations, the orientable hand shower 100 ensures continuous delivery of the jet of water.

The orientable hand shower 100 further comprises an abutment element 3. Such abutment element 3 is interposed between the head 1 and the pipe 2. Such abutment element 3 does not perform the function of a hydraulic seal and is therefore not comparable to a gasket.

The abutment element 3 is provided with an upper base 31 and a lower base 32. The upper base 31 faces the head 1, and the lower base 32 faces the pipe 2.

Said upper base 31 and a lower base 32 are parallel and offset therebetween. In other words, the centers of the upper base 31 and of the lower base 32 do not lie on the same imaginary line.

According to one embodiment, the upper base 31 and the lower base 32 are elliptical in shape.

The abutment element 3 is provided with an opening 33 that is suitable for creating a passage between the upper base 31 and the lower base 32.

A plurality of gripping teeth 321 protrudes from the lower base 32 of the abutment element 3. Said plurality of gripping teeth 321 is suitable for engaging by shape coupling a plurality of gripping loops 231 obtained on the pipe base 21.

By means of such coupling the abutment element 3 becomes an extension of the pipe base 2. In other words, the abutment element 3 is integral with the pipe base 2.

The upper base 31, the lower base 32 and the pipe base 21 are parallel therebetween.

When the plurality of gripping teeth 321 engages the plurality of gripping loops 231, the pipe engagement means 22 pass through the opening 33, occupying a part thereof, until interacting and engaging the head engagement means 12.

In said embodiment, the rotation axis X passes through the centers of the head hole 13, the pipe hole 23, and the opening 33.

The head 1 is suitable for performing a complete rotation about the rotation axis X with respect to the pipe assembly 2 and abutment element 3.

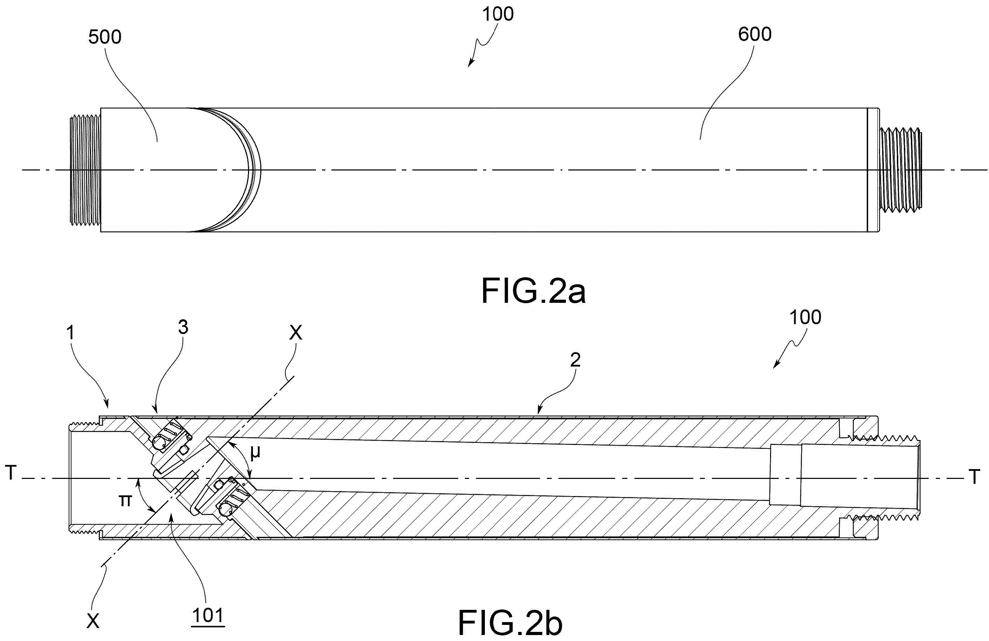

When the head axis T of the head 1 and the pipe axis C of the pipe 2 are aligned and coincident, the orientable hand shower 100 is in a rectilinear configuration A, shown for example in Figure 2.

In said rectilinear configuration A, the head base 11, the pipe base 21, the upper base 31, and the lower base 32 are arranged upon planes that are parallel therebetween.

By rotating the head 1 about the axis X with respect to the pipe assembly 2 and abutment element 3, the orientable hand shower 100 reaches an angle configuration B.

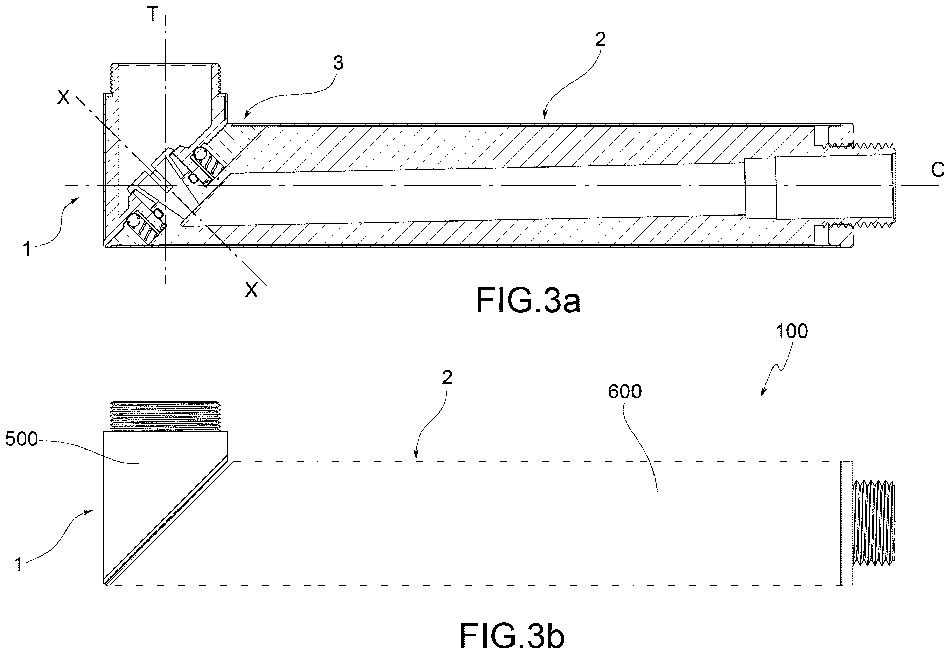

In said angle configuration B, shown for example in Figure 3, the head base 11, the pipe base 21, the upper base 31, and the lower base 32 are arranged upon planes that are parallel therebetween and the head axis T of the head 1 and the pipe axis C of the pipe 2 are perpendicular.

In one embodiment, the amplitude of the head inclination angle π and the pipe inclination angle µ is equal to 45° and allows, starting from the rectilinear configuration A, a head 1 rotation of 180° about the axis of rotation X with respect to the pipe assembly 2 and the abutment element 3 allows the orientable hand shower to reach the angle configuration B.

It is clear that there infinite configurations may be obtained from the complete rotation of the head 1 about the rotation axis X with respect to the pipe assembly 2 and abutment element 3. Advantageously, during rotation and in all of the infinite configurations, the orientable hand shower 100 ensures continuous delivery of the jet of water.

In one embodiment, the presence of the abutment element 3 advantageously allows continuity to be obtained between the head 1 and the pipe 2.

Advantageously, the presence of the abutment element 3 makes it possible to facilitate the coupling between the head 1 and the pipe 2, accompanying the rotation of the head 1 about the axis X with respect to the pipe assembly 2 and reducing friction between the head 1 and the pipe 2.

In one embodiment, the abutment element 3 is made of a different material with respect to the head 1 and the pipe 2. This aspect makes it possible to further reduce the coefficient of friction between the elements during mutual rotation.

Advantageously, the abutment element 3 allows the head base 11, the pipe base 21, the upper base 31, and the lower base 32 to remain parallel both in the rectilinear configuration A and in the angle configuration B.

In addition, the opening 33 of the abutment element 3 makes it possible to guide the mutual engagement between the head engagement means 12 and the pipe engagement means 22.

In one embodiment, in the lower base 32 of the abutment element 3, a pair of through niches 34, 35 is obtained, suitable for housing block elements 36, and a block housing pair 114, 115 is formed on the base 11 of the head 1.

In one embodiment, the block elements 36 comprise a pair of beads 361, 362 and a pair of elastic elements 363, 364.

In one embodiment, the pair of elastic elements 363, 364 is a pair of sealing springs.

When the orientable hand shower 100 is in the rectilinear configuration A or in the angle configuration B, the pair of beads 361, 362 is kept in the abutment position with the block housing pair 114, 115 by the action of the pair of elastic elements 363, 364.

Therefore, when the pair of beads 361, 362 engages the block housing pair 114, 115, the orientable hand shower 100 is partially constrained in the current configuration.

Advantageously, the abutment element 3 allows the block elements 36 to be housed within a covered seat, improving the aesthetic appearance and mechanical properties of the orientable hand shower 100.

According to one embodiment variant, the pipe surface 201 of the pipe 2 comprises a plurality of parallel ribs 211 arranged in a parallel direction with respect to the pipe axis C and a plurality of perpendicular ribs 212 arranged perpendicularly with respect to said plurality of parallel ribs 211. Such ribs 211, 212 advantageously allow for better stability and sealing during use.

The head 1 comprises a dispensing portion 190, provided with head coupling means 180. Such head coupling means 180 are suitable for associating the head 1 with an outer aerator.

For example, the head coupling means 180 are of the threaded, bayonet, or interlocking type.

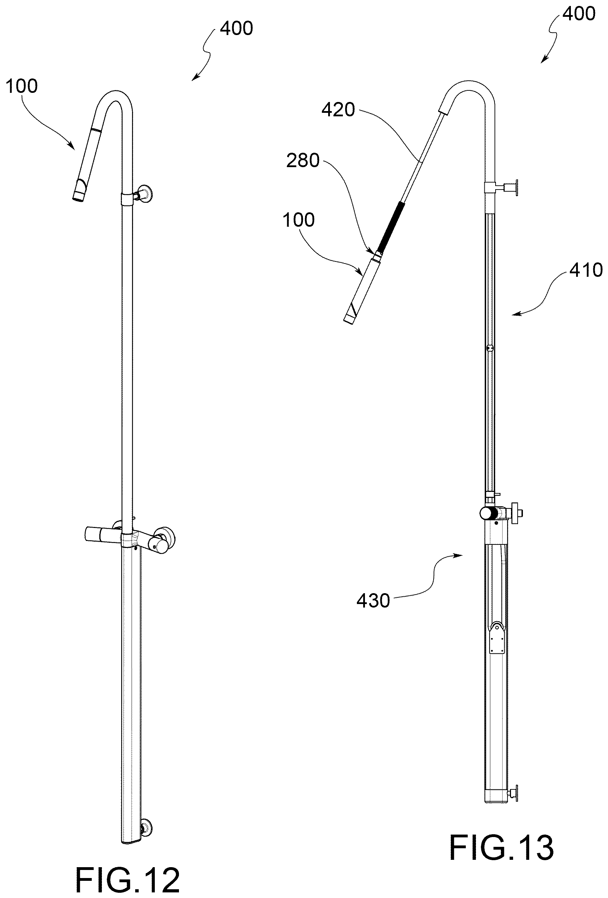

The pipe 2 comprises an end portion 290, provided with pipe coupling means 280. Such pipe coupling means 280 are suitable for associating the pipe 2 with a connection element, for example for connecting the orientable hand shower 100 to a shower column, as illustrated in Figure 12.

For example, the pipe coupling means 280 are of the threaded, bayonet, or interlocking type.

In one embodiment, depicted in figures 12 and 13, the pipe coupling means 280 allow the orientable hand shower 100 to be associated with a shower column 410. The shower column 410 is provided with an extractable hose 420 and a return system 430.

This configuration makes it possible to create a shower unit 400, wherein it is possible to remove the orientable hand shower 100 from the seat thereof by simply pulling it. After use, it is then possible to release the hand shower, which is automatically returned to the seat thereof by means of the return system 430. Advantageously, the shower unit 400 adds greater flexibility while using the orientable hand shower 100.

The orientable hand shower 100 further comprises a head covering 500 and a handle covering 600.

The head covering 500 is suitable for covering the head 1 and move integrally therewith.

The handle covering 600 is suitable for covering the pipe 2 and the abutment element 3.

In one embodiment, the head covering 500 and the handle covering 300 are made of the same material.

In a further embodiment, the head covering 500 and the handle covering 600 are made of a material that is suitable for being surface-treated. These treatments may include galvanic processes, painting and physical vapor deposition (PVD).

In a further embodiment, the head covering 500 and the handle covering 600 are made of brass.

Innovatively, the present invention solves the typical drawbacks with the prior art.

Advantageously, the presence of a head that may be oriented in various directions allows the user greater flexibility and usage versatility compared to traditional hand showers with heads that have a fixed orientation.

In fact, advantageously, the orientable hand shower allows the direction of the jet of water to be adjusted according to the preferences of the user, allowing specific areas of the body to be reached or to adapt to different user heights.

According to a further advantage, when the hand shower is inserted into a support, it is possible, by rotating the orientable head relative to the pipe, to direct the flow of water and constrain it to the shower structure.

Advantageously, said orientable hand shower is easy to manufacture and implies the presence of a limited number of components.

Furthermore, according to a further advantage, the hand shower according to the invention has a limited footprint and is easy to maneuver.

Advantageously, the presence of the head and pipe coverings allows those internal components that have the function of conveying the jet of water.

In addition, advantageously, the presence of aesthetic covers that adapt to the different configurations of the orientable hand shower ensures an innovative design.

Finally, advantageously, the possibility of directing the jet of water through the use of the orientable hand shower also allows users with reduced mobility greater flexibility and handling, thereby increasing accessibility and comfort during use.

It is clear that to the embodiments of the aforesaid invention, a person skilled in the art, in order to meet specific needs, could make variations or substitutions of elements with functionally equivalent ones.

Such variants are also included within the scope of protection as defined by the following claims. Moreover, each variant described as belonging to a possible embodiment may be implemented independently of the other variants described.

## Claims

1. A hand shower (100) comprising:
- an orientable head (1) having a head axis (T), comprising a contact portion (10), comprising a head base (11), inclined by a head angle (α) with respect to the head axis (T), and head engagement means (12);
- a handle pipe (2), having an axisymmetric extension about a pipe axis (C), comprising an engagement portion (20), comprising a pipe base (21), inclined by a pipe angle (β) with respect to the pipe axis (C), and pipe engagement means (22), suitable for engaging the head engagement means (12) by means of a sealed coupling;
**characterized in that** the head (1) is suitable for rotating with respect to the pipe (2) about a rotation axis (X) perpendicular to the head base (11) and to the pipe base (21) and inclined by a head inclination angle (π) with respect to the head axis (T) and by a pipe inclination angle (µ) with respect to the pipe axis (C) and **characterized in that** it comprises an abutment element (3) interposed between the head (1) and the pipe (2) and comprising an upper base (31) facing the head (1), and a lower base (32) facing the pipe (2), parallel to and offset therebetween.

2. A hand shower (100) according to the preceding claim, wherein the rotation of the head (1) about the axis (X) allows achieving a rectilinear configuration (A) in which the head axis (T) and the pipe axis (C) are aligned and coincident, or an angular configuration (B) in which the head axis (T) and the pipe axis (C) are perpendicular.

3. A hand shower (100) according to claims 1 or 2, wherein the head (1) comprises a head surface (100), defining a head compartment (101), and the head engagement means (12) define a head hole (13) connected to the head compartment (101), wherein the pipe (2) comprises a pipe surface (200), defining a pipe compartment (201), and the pipe engagement means (22) define a pipe hole (23) connected to the pipe compartment (201),
wherein the pipe engagement means (22) comprise a male engagement means (221) suitable for engaging the head engagement means (12).

4. A hand shower (100) according to any one of the preceding claims, wherein the rotation axis (X) passes through the center of the head hole (13) and through the center of the pipe hole (23).

5. A hand shower (100) according any one of the preceding claims, wherein the abutment element (3) is provided with a through opening (33) between the upper base (31) and the lower base (32).

6. A hand shower (100) according to the claim 5, wherein the pipe engagement means (22) cross the opening (33) and engage the head engagement means (12).

7. A hand shower (100) according to any one of the preceding claims, wherein the rotation axis (X) passes through the center of the head hole (13), through the center of the pipe hole (23), and through the opening (33).

8. A hand shower (100) according to any one of the preceding claims, wherein the pipe engagement means (22) comprise a groove (220), suitable for housing a sealing element (331) which, by being pressed, acts between the head engagement means (12) and the pipe base (21).

9. A hand shower (100) according to any one of the preceding claims, comprising a coupling element (330), fitted onto the pipe engagement means (22), suitable for abutting against the pipe base (21).

10. A hand shower (100) according to any one of the preceding claims, wherein the head angle (α) and the pipe angle (β) have the same width, preferably less than 90°, even more preferably equal to 45°.

11. A hand shower (100) according to any one of the preceding claims, wherein the head inclination angle (π) and the pipe inclination angle (µ) have the same width, preferably equal to 45°.

12. A hand shower (100) according to any one of the preceding claims, wherein the head base (11), the pipe base (21), the upper base (31), and the lower base (32) are elliptical in shape.

13. A hand shower (100) according to any one of the preceding claims, wherein the pipe engagement means (22) are misaligned with respect to the center of the pipe base (21) .

14. A hand shower (100) according to any one of the preceding claims, wherein the head (1) comprises a dispensing portion (190), provided with head coupling means (180), suitable for associating the head (1) with an outer aerator, and wherein the pipe (2) comprises an end portion (290), provided with pipe coupling means (280), suitable for associating the pipe (2) with a connection element.

15. A shower assembly (400) comprising:
- an orientable hand shower (100) according to any one of the preceding claims;
- a shower column (410), comprising an extractable hose (420), suitable for being associated with the pipe coupling means (280) of the orientable hand shower (100), and a return system (430), suitable for automatically bringing the orientable shower (100) back into the seat.
